# EUROPEAN PATENT APPLICATION

(11) **EP 4 401 282 A1**
(43) Date of publication of application: **17.07.2024**
(21) Application number: 23203997.4
(22) Date of filing: 17.10.2023
(51) Int. Cl.: H02J 9/06, H02J 7/00, H02J 7/34

(54) **ELECTRIC POWER SUPPLY DEVICE FOR NETWORK DEVICES, IN PARTICULAR OF THE RESIDENTIAL TYPE**

(30) Priority: 11.01.2023 IT 202300000198
(71) Applicant: Newen Srl, 20097 San Donato Milanese (MI) (IT)
(72) Inventor: POSCA, Emilio, 20138 MILANO (IT)
(74) Representative: Modiano, Micaela Nadia

(57) **Abstract**

An electric power supply device (10) for network devices, in particular of the residential type, which is electrically connectable in input to an electricity mains supply and in output to at least one network device, and which comprises:
- an AC/DC converter (12) configured to convert an alternating current voltage (42) to a direct current voltage;
- a rechargeable battery pack (18) configured to store electric power and provide a direct current voltage;
- a battery charger (14) configured to receive the direct current voltage of the AC/DC converter (12) and to electrically supply and charge the rechargeable battery pack (18); and
- a voltage regulator (22) configured to stabilize the direct current voltage of the rechargeable battery pack (18);
- an electric power buffer (38) configured to receive the direct current voltage of the AC/DC converter (12), in order to store electric power and to supply a direct current voltage;
- a preliminary input sensor (40) configured to receive and detect the direct current voltage of the AC/DC converter (12), in order to deactivate the battery charger (14) and activate the voltage regulator (22), in the absence of the direct current voltage of the AC/DC converter (12), and in order to activate the battery charger (14) and deactivate the voltage regulator (22), in the presence of the direct current voltage of the AC/DC converter (12); and
- a first switch (24) configured to manage a switching between the direct current voltage of the AC/DC converter (12), that of the electric power buffer (38), and that of the rechargeable battery pack (18), on the basis of the presence/absence of the alternating current voltage (42) and therefore of the direct current voltage of the AC/DC converter (12).

## Description

The present invention relates to an electric power supply device for network devices, in particular network of the residential type, i.e. that can be used in dwellings, small offices and the like, for example modems, routers, hubs, repeaters and the like.

The electric power supply device for network devices according to the invention is particularly, although not exclusively, useful and practical in the field of access networks, i.e. the end portions of telecommunications networks adapted for connection between a user and his or her service provider of connectivity to a telecommunications network.

In recent years a progressive technological development has been seen worldwide in the optimization of energy consumption, including consumption of electric power. Simultaneously, a further development has been seen, also worldwide, in the telecommunications sector for connectivity "always and everywhere", and this is driven at least partially by the substantial increase in work being done remotely.

Nowadays, the spread of new telematic services that require increasingly high levels of performance, for example in terms of propagation speed and data transmission bandwidth, entails a continuous evolution of telecommunications networks. In other words, telecommunications networks have developed in order to support the new telematic services and guarantee high performance levels for the user.

In particular, traditional broadband connection technologies based on copper phone lines, which have acronyms like xDSL (Digital Subscriber Line), have progressively been replaced by advanced broadband connection technologies based on optic fiber connections, which have acronyms like FTTx (Fiber To The).

For xDSL, the end portion i.e. the connection access portion, is made of copper and, in order to increase the bandwidth and minimize the length of this portion, it is necessary to house the transmission equipment in special roadside kiosks or cabinets.

For FTTx, on the other hand, the connection uses cables made of glass or silicon fiber, the telecommunications network is completely passive, and the transmission equipment is housed at the exchange.

In general, one consequence of the telecommunications networks described above consists of the implementation of a network structure that comprises network devices which are active at the exchange, in roadside cabinets (if any), and all the way down to residential network devices.

It is known that the use of the telecommunications networks described above, in addition to maintaining traditional telematic services, for example voice calls, internet and web access, video streaming and the like, is driving, especially at the residential level, demand from end users for more telematic services, for example video surveillance, security services, home automation, IoT (Internet of Things) services and the like.

In general, in telecommunications networks, great importance is given not only to the presence of connectivity, but also to its characteristics of propagation speed, bandwidth, and service continuity.

With regard to the service continuity of telecommunications networks, and therefore to the connectivity, it should be noted that the reliability of the network devices is very high, but interruptions to the electric power supply to these network devices have negative effects on the service, interrupting the use thereof by the user.

In particular, the greatest critical issues are found in residential network devices that, not having an auxiliary or backup electric power source, completely cease to function following an outage in the electricity supply.

Residential network devices, for example modems, routers, hubs, repeaters and the like, are network access components, i.e. end portions of the telecommunications networks, and are adapted to ensure the operation, efficiency, reliability and scalability of those networks. Therefore, since these are active devices, their operation depends on a source of electric power.

Nowadays, auxiliary or backup electric power supply devices are known which are used to compensate for sudden anomalies, for example voltage sags and outages, in the electrical power supply that is normally used, in this manner keeping electric apparatuses in general adequately powered.

These conventional devices, known as uninterruptible power supplies (UPS), are connected electrically to the electricity mains supply, are situated upstream of the power supply of the electric apparatuses, and operate using alternating current.

These conventional uninterruptible power supplies charge their internal batteries and, by virtue of these internal batteries, supply electric power in output, continuously and constantly, even in the event of an outage of the input electrical power supply.

However, these conventional uninterruptible power supplies are not devoid of drawbacks, which have led to their substantially non-use in residential environments, i.e. in dwellings, small offices and the like.

A drawback of these conventional uninterruptible power supplies consists in that the levels of power they support (for example 900 volt-amperes) are far higher than the levels of power required (for example 25 volt-amperes) by residential network devices.

Another drawback of these conventional uninterruptible power supplies consists in that they are inadequate in terms of energy efficiency, owing to the double conversion, first AC/DC (Alternating Current/Direct Current) in input and then DC/AC (Direct Current/Alternating Current) in output.

A further drawback of these conventional uninterruptible power supplies consists in that they operate outside the network device and outside the associated power supply, therefore beside these, and in that typically they are very large and bulky.

Another drawback of these conventional uninterruptible power supplies consists in that typically they comprise and use lead batteries which have an operating lifespan limited to just 2 or 3 years.

In order to overcome the above-mentioned drawbacks, further electric power supply devices have been provided which combine traditional electric power supply features, like ordinary electric power supplies, with auxiliary or backup electric power supply features, like the conventional uninterruptible power supplies described above, thus keeping electric apparatuses in general sufficiently powered.

These further conventional devices are electrically connected to the electricity mains supply. In the presence of the main source of electric power in input, these conventional devices normally power the electric apparatus to which they are electrically connected, and charge their internal batteries. In the absence of the main source of electric power in input, however, the auxiliary or backup electric power supply intervenes, supplying the electric power that it previously stored in the batteries in output, and so powering the electric apparatus to which they are electrically connected.

In other words, these further conventional devices, in the presence of the main source of electric power in input, electrically power the electric apparatus with the electric power originating from that main source, while, in the absence of the main source of electric power in input, electrically power the electric apparatus with the electric power originating from its internal batteries.

The transition, or rather the switching, from the main source to the batteries is done automatically upon detection of the absence of the main source. Conversely, the transition, or rather the switching, from the batteries to the main source is done automatically upon detection of the presence of the main source.

However, these further conventional devices are not devoid of drawbacks either, among which is the fact that the transition, or rather the switching, from the main source to the batteries, and vice versa, briefly interrupts the electric power supply to the electric apparatus. Typically, this interruption to the electric power supply lasts a few tens of milliseconds.

Since residential network devices have very stringent electric power supply requirements, are very sensitive to the absence of electric power, and withstand interruptions to the electric power supply of a maximum duration of a few milliseconds, the above interruption, although brief, causes the shutdown and restart of these residential network devices, with the consequent execution of an initialization procedure to align, or rather realign, such residential network devices with the network apparatuses at the exchange of the service provider. Typically, this initialization procedure lasts a few minutes.

The aim of the present invention is to overcome the drawbacks of the known art described above, by devising an electric power supply device for network devices, in particular of the residential type, that makes it possible to obtain better effects than those that can be obtained with conventional solutions and/or similar effects at lower cost and with higher performance levels.

Within this aim, an object of the present invention is to provide an electric power supply device for network devices, in particular of the residential type, which makes it possible to electrically power such network devices continuously and constantly, i.e. even in the event of an interruption in the main source of electric power, thus ensuring the continuity of the service supplied by means of such network devices.

Another object of the present invention is to devise an electric power supply device for network devices, in particular of the residential type, which makes it possible to eliminate the negative effects, in particular the brief interruption to the electric power supply, caused by the transition, or rather the switching, from the main source of electric power to the internal batteries, and vice versa, thus avoiding the execution of the initialization procedure at each transition or switching.

Another object of the present invention is to devise an electric power supply device for network devices, in particular of the residential type, which makes it possible to maximize energy efficiency.

Another object of the present invention is to devise an electric power supply device for network devices, in particular of the residential type, which does not increase the number of devices present in a residential or business environment.

Another object of the present invention is to provide an electric power supply device for network devices, in particular of the residential type, that is highly reliable, easily and practically implemented, and economically competitive when compared to the known art.

This aim and these and other objects which will become better apparent hereinafter are achieved by an electric power supply device for network devices, in particular of the residential type, which is electrically connectable in input to an electricity mains supply and in output to at least one network device, and which comprises:
- an AC/DC converter configured to convert an alternating current voltage to a direct current voltage;
- a rechargeable battery pack configured to store electric power and provide a direct current voltage;
- a battery charger electrically connected to said AC/DC converter and to said rechargeable battery pack, and configured to receive said direct current voltage that arrives from said AC/DC converter and to electrically supply and charge said rechargeable battery pack; and
- a voltage regulator electrically connected to said rechargeable battery pack and configured to stabilize said direct current voltage that arrives from said rechargeable battery pack;
characterized in that it further comprises:
- an electric power buffer, electrically connected to said AC/DC converter and configured to receive said direct current voltage that arrives from said AC/DC converter, in order to store electric power and to provide a direct current voltage;
- a preliminary input sensor, electrically connected to said AC/DC converter and configured to receive and detect said direct current voltage that arrives from said AC/DC converter, in order to deactivate said battery charger and activate said voltage regulator, in the absence of said direct current voltage arriving from said AC/DC converter, and to activate said battery charger and deactivate said voltage regulator, in the presence of said direct current voltage that arrives from said AC/DC converter; and
a first switch, electrically connected to said AC/DC converter, to said electric power buffer and to said voltage regulator, and configured to manage a switching between said direct current voltage that arrives from said AC/DC converter, said direct current voltage that arrives from said electric power buffer, and said direct current voltage that arrives from said rechargeable battery pack, on the basis of the presence/absence of said alternating current voltage and thus of said direct current voltage that arrives from said AC/DC converter.

Further characteristics and advantages of the present invention will become better apparent from the detailed description of a preferred, but not exclusive, embodiment of the electric power supply device for network devices, in particular of the residential type, according to the invention, illustrated by way of non-limiting example with the assistance of the accompanying drawings wherein:
Figure 1 is a block diagram that schematically illustrates an embodiment of the electric power supply device for network devices, in particular of the residential type, according to the present invention;
Figure 2 is a graph showing the respective trends over time of some elements of an embodiment of the electric power supply device for network devices, in particular of the residential type, according to the present invention;
Figure 3 is a perspective view of an embodiment of the electric power supply device for network devices, in particular of the residential type, according to the present invention.

The electric power supply device for network devices according to the invention is electrically connected or connectable in input to an electricity mains supply, and in output to at least one network device, in particular of the residential type, for example a modem, router, hub, repeater and the like.

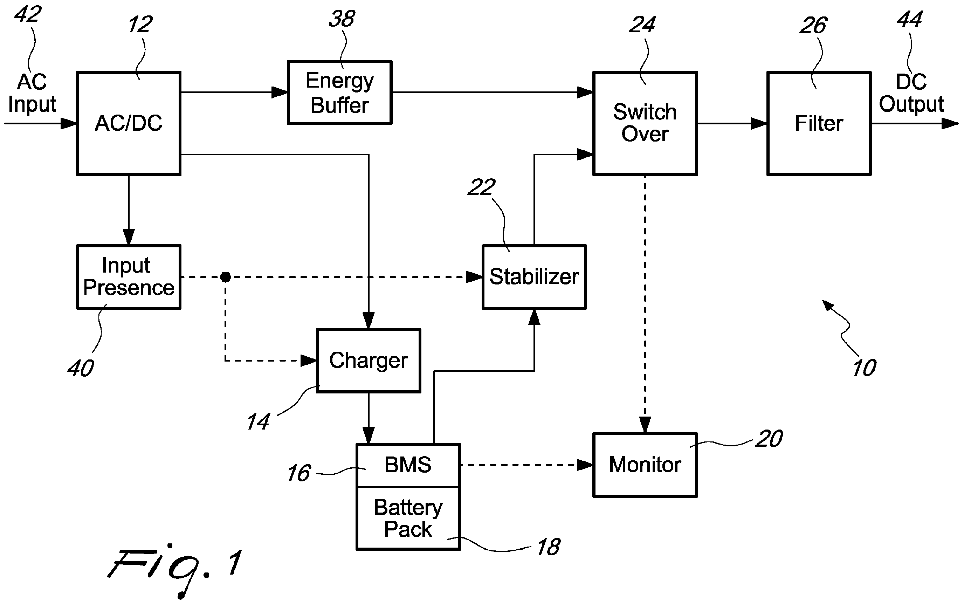

With particular reference to Figure 1, the electric power supply device for network devices, in particular of the residential type, according to the invention, generally designated by the reference numeral 10, substantially comprises an AC/DC converter 12, a battery charger 14, advantageously a battery management system 16, a rechargeable battery pack 18, a voltage regulator 22, a switch 24, advantageously an EMI filter 26, an electric power buffer 38 and a preliminary input sensor 40.

The electric power supply device 10 for network devices according to the invention comprises a first electrical connection line and a second electrical connection line. The first electrical connection line starts at the AC/DC converter 12, passes through the electric power buffer 38, and ends at the switch 24. The second electrical connection line starts at the AC/DC converter 12, passes through the battery charger 14, the battery management system 16 (if any), the rechargeable battery pack 18 and the voltage regulator 22, and ends at the switch 24.

The AC/DC converter 12 of the electric power supply device 10 for network devices according to the invention is electrically connected to the switch 24 indirectly, by way of the first electrical connection line which comprises the electric power buffer 38. The AC/DC converter 12 is electrically connected to the battery charger 14 directly, by way of the second electrical connection line.

The AC/DC converter 12 is configured to convert the input voltage in alternating current 42, originating from the main source of electric power in input to the electric power supply device 10, i.e. from the electricity mains supply, to an output voltage in direct current. According to an embodiment, the AC/DC converter 12 supplies an output voltage in direct current of 12 volts, in the presence of an input voltage 42.

The AC/DC converter 12 is electrically connected to the battery charger 14, by way of the second electrical connection line, and is configured to supply electric power, in particular the output voltage in direct current, to the battery charger 14, in the presence of the input voltage in alternating current 42, originating from the main source of electric power in input to the electric power supply device 10, i.e. from the electricity mains supply.

The battery charger 14 of the electric power supply device 10 for network devices according to the invention is configured to receive the output voltage in direct current originating from the AC/DC converter 12. The battery charger 14 is electrically connected to the rechargeable battery pack 18, by way of the second electrical connection line. The battery charger 14 is further configured to electrically supply and charge the rechargeable battery pack 18, thus managing and ensuring the storage of electric power in that rechargeable battery pack 18.

In a preferred embodiment, the battery charger 14 is configured to operate in a sequence of phases in order to optimize the electric power supply, and therefore the charging, of the rechargeable battery pack 18. These phases comprise:
- phase 1 (charging at constant current): the charging of the rechargeable battery pack 18 occurs at a constant current, for example with a current value of 500 mA, in order to prevent the AC/DC converter 12 from being overcharged. The voltage present in the rechargeable battery pack 18 increases linearly over time until it reaches a voltage threshold, for example 90% of the final charge voltage value of the rechargeable battery pack 18;
- phase 2 (charging at a constant voltage): the charging of the rechargeable battery pack 18 occurs at a constant voltage. The current decreases progressively over time until it reaches a current threshold, for example 10% of the nominal charge current value applied in phase 1;
- phase 3 (maintenance): the voltage of the rechargeable battery pack 18 is kept constant by proceeding with brief charging operations whenever the voltage of the rechargeable battery pack 18 is lower than a voltage threshold, for example 95% of the final charge voltage value of the rechargeable battery pack 18.

Advantageously, in the event of absence of the network device that is electrically connected to the electric power supply device 10 according to the invention, the charging of the rechargeable battery pack 18 is carried out in pulsed mode, independently of the phase in which the battery charger 14 is currently. This solution extends the charging time, but makes it possible to drastically reduce power consumption.

The rechargeable battery pack 18 of the electric power supply device 10 for network devices according to the invention is configured to receive and store the electric power originating from the battery charger 14, in particular a direct current voltage. The rechargeable battery pack 18 is electrically connected to the battery charger 14, by way of the second electrical connection line. The rechargeable battery pack 18 is further configured to supply the electric power that was stored previously, in particular a direct current voltage, thus ensuring the operation of the network device, in particular of the residential type, which is electrically connected to the electric power supply device 10, even in the absence of the input voltage in alternating current 42, originating from the main source of electric power in input to the electric power supply device 10, i.e. from the electricity mains supply.

Advantageously, the rechargeable battery pack 18 comprises at least one battery provided with a protection device of the CID (Current Interrupt Device) type, configured to provide ohmic isolation, by opening the contact of the positive pole, in the event of an increase in the internal pressure of the battery, for example caused by overheating, current surge, or voltage surge.

According to an embodiment, the rechargeable battery pack 18 comprises at least one battery of the Li-Ion NCM (Nickel-Cobalt-Manganese) type, for example of the 18650 format. In a preferred embodiment, the rechargeable battery pack 18 comprises a plurality of batteries (for example three) of the Li-Ion NCM type, for example of the 18650 format, connected electrically in series.

According to an embodiment, the rechargeable battery pack 18 can store up to 32 watt-hours of electric power.

According to an embodiment, the rechargeable battery pack 18 can operate at a maximum surface temperature of 60 °C of the batteries, both in the discharging phase and in the charging phase. According to an embodiment, the rechargeable battery pack 18 can operate at a surface temperature higher than 55 °C of the batteries, both when resuming discharging and when resuming charging. According to an embodiment, the rechargeable battery pack 18 can operate at a minimum surface temperature of 0 °C of the batteries, both in the discharging phase and in the charging phase. According to an embodiment, the rechargeable battery pack 18 can operate at a surface temperature lower than 5 °C of the batteries, both when resuming discharging and when resuming charging.

According to an embodiment, the charging voltage of the rechargeable battery pack 18 is approximately 12.6 V DC. According to an embodiment, the charging current of the rechargeable battery pack 18 is approximately 0.5 A.

As mentioned, according to an embodiment the battery charger 14 is electrically connected directly to the rechargeable battery pack 18, and vice versa.

As mentioned, advantageously, the electric power supply device 10 for network devices according to the invention further comprises a battery management system (BMS) 16.

According to another embodiment, the battery charger 14 is electrically connected indirectly to the rechargeable battery pack 18, and vice versa, by way of the battery management system 16. Therefore, in this other embodiment, the rechargeable battery pack 18 and the battery charger 14 of the electric power supply device 10 according to the invention are both electrically connected to the battery management system 16.

The battery management system 16 of the electric power supply device 10 for network devices according to the invention is configured to manage the operation of the rechargeable battery pack 18, applying the necessary controls to ensure the correct operation/use of that rechargeable battery pack 18, in addition to maximizing the operating lifespan and increasing safety.

Preferably, the battery management system 16 is further configured to operate on the rechargeable battery pack 18 in the event of the presence of parameters exceeding their thresholds for the rechargeable battery pack 18.

For example, parameters that can exceed their thresholds can be: exceeding the established maximum value of discharge current, for example 5 A; exceeding the maximum operating temperature of the rechargeable battery pack 18, for example 60 °C; and reaching the minimum voltage of the rechargeable battery pack 18, for example 7.5 V.

Advantageously, the battery management system 16 is further configured to ensure the operating limits of the rechargeable battery pack 18 are not exceeded, i.e. that the respective maximum and/or minimum threshold values are not exceeded by a plurality of parameters of the rechargeable battery pack 18.

According to an embodiment, the battery management system 16 controls one or more of the following parameters associated with the rechargeable battery pack 18: the charging current, the maximum charging voltage, the minimum discharge voltage, the maximum discharge current, the maximum operating temperature.

By controlling these and other parameters the correct operation/use of the rechargeable battery pack 18 in ensured, in addition to maximizing the operating lifespan and increasing safety.

According to an embodiment, the battery management system 16 is further configured to interrupt the connection of the batteries comprised in the rechargeable battery pack 18 by way of a "cut-off" function.

According to an embodiment, the battery management system 16 comprises a microcontroller and a power interface which are functionally connected to each other. In practice, the power interface acts as an intermediary between the microcontroller and the electrical connection line.

According to an embodiment, the battery management system 16 operates in concert with the battery charger 14 and with the switch 24. For example, if the battery management system 16 interrupts the connection of the batteries comprised in the rechargeable battery pack 18, then as a consequence the battery charger 14 and the switch 24 will both be disconnected from the rechargeable battery pack 18.

According to an embodiment, the electric power supply device 10 comprises a second switch (not shown) arranged between the rechargeable battery pack 18 and the battery management system 16. This second switch is configured to isolate the rechargeable battery pack 18, by interrupting its connection with the battery management system 16. For example, this interruption is performed so as not to have voltages in output to the electric power supply device 10 during the energy storage phase, both for reasons of safety and in order to preserve the electric power that was stored previously.

In a preferred embodiment, the electric power supply device 10 for network devices according to the invention further comprises signaling means (or monitoring means) 20, for example one or more LEDs. In this preferred embodiment, the battery management system 16 is functionally connected to the signaling means 20, and vice versa.

The signaling means 20 are configured to emit a visual signal, preferably luminous, indicating an operating status of the electric power supply device 10.

According to an embodiment, the signaling means 20 are configured to indicate one or more of the following operating statuses: the correct operation of the electric power supply device 10, the charged status of the rechargeable battery pack 18, the depleted status of the rechargeable battery pack 18, and any anomalies.

According to an embodiment, the signaling means 20 are configured to emit a luminous signal:
- green: input voltage in alternating current 42 is present, originating from the main source of electric power in input to the electric power supply device 10, and the rechargeable battery pack 18 is charged or charging;
- red: input voltage in alternating current 42 is absent, originating from the main source of electric power in input to the electric power supply device 10, and the rechargeable battery pack 18 is discharging;
- blue: input voltage in alternating current 42 is absent, originating from the main source of electric power in input to the electric power supply device 10, and the rechargeable battery pack 18 is close to depletion; and
- absent: input voltage in alternating current 42 is absent, originating from the main source of electric power in input to the electric power supply device 10, and the rechargeable battery pack 18 is fully depleted.

According to an embodiment, the rechargeable battery pack 18 is electrically connected to the voltage regulator 22, and vice versa, by way of the second electrical connection line.

According to another embodiment, the battery management system 16 is electrically connected to the voltage regulator 22, and vice versa, by way of the second electrical connection line. Therefore, the voltage regulator 22 is electrically connected directly to the battery management system 16, and indirectly to the rechargeable battery pack 18.

The voltage regulator (or stabilizer) 22 of the electric power supply device 10 for network devices according to the invention is configured to stabilize, i.e. keep constant, the output voltage of the rechargeable battery pack 18, during the discharging phase, and therefore in the absence of the main source of electric power. During the discharging phase, the voltage supplied by the rechargeable battery pack 18 decreases linearly.

According to an embodiment, the voltage regulator 22 operates in SEPIC mode, by way of an inductive circuit that ensures the output voltage is maintained independently of the input voltage to the voltage regulator 22.

The voltage regulator 22 is electrically connected to the switch 24, and vice versa, by way of the second electrical connection line. Therefore, the switch 24 is electrically connected both to the AC/DC converter 12 and to the electric power buffer 38, by way of the first electrical connection line, and also to the voltage regulator 22, by way of the second electrical connection line.

The preliminary input sensor 40 of the electric power supply device 10 for network devices according to the invention is configured to receive and detect the output voltage in direct current originating from the AC/DC converter 12. The preliminary input sensor 40 is electrically connected to the AC/DC converter 12, and vice versa.

The preliminary input sensor 40 is configured to deactivate (or keep deactivated) the battery charger 14 and activate (or keep activated) the voltage regulator 22, in the absence of the output voltage of the AC/DC converter 12. The preliminary input sensor 40 is further configured to activate (or keep activated) the battery charger 14 and deactivate (or keep deactivated) the voltage regulator 22, in the presence of the output voltage of the AC/DC converter 12.

In particular, the preliminary input sensor 40 is configured to operate on the basis of the presence/absence of the input voltage in alternating current 42, originating from the main source of electric power in input to the electric power supply device 10, i.e. from the electricity mains supply, and therefore on the basis of the presence/absence of the output voltage of the AC/DC converter 12.

If the output voltage of the AC/DC converter 12 is absent, then the preliminary input sensor 40 activates the path, i.e. the second electrical connection line, between the rechargeable battery pack 18, the battery management system 16 (if any), the voltage regulator 22, and the switch 24.

If, instead, the output voltage of the AC/DC converter 12 is present, the preliminary input sensor 40 activates the path, i.e. the second electrical connection line, between the AC/DC converter 12, the battery charger 14, the battery management system 16 (if any), and the rechargeable battery pack 18.

The AC/DC converter 12 is electrically connected to the electric power buffer 38, by way of the first electrical connection line, and is configured to supply electric power, in particular the output voltage in direct current, to the electric power buffer 38, in the presence of the input voltage in alternating current 42, originating from the main source of electric power in input to the electric power supply device 10, i.e. from the electricity mains supply.

The electric power buffer 38 of the electric power supply device 10 for network devices according to the invention is configured to receive the output voltage in direct current originating from the AC/DC converter 12. The electric power buffer 38 is further configured to receive and store the electric power originating from the AC/DC converter 12, in particular the output voltage in direct current. This electric power stored in the electric power buffer 38 is necessary for maintaining the output voltage in direct current during the transition, or rather the switching, between the direct current voltage originating from the AC/DC converter 12 and the direct current voltage originating from the rechargeable battery pack 18 and stabilized by the voltage regulator 22. The electric power buffer 38 is electrically connected to the AC/DC converter 12, by way of the first electrical connection line.

The electric power buffer 38 is configured to supply the electric power that was stored previously, in particular a direct current voltage, to the switch 24, thus ensuring the operation of the network device, in particular of the residential type, which is electrically connected to the electric power supply device 10, even in the absence of the input voltage in alternating current 42, originating from the main source of electric power in input to the electric power supply device 10, i.e. from the electricity mains supply. The electric power buffer 38 is electrically connected to the switch 24, by way of the first electrical connection line.

In particular, the electric power buffer 38 is configured to operate on the basis of the presence/absence of the input voltage in alternating current 42, originating from the main source of electric power in input to the electric power supply device 10, i.e. from the electricity mains supply, and therefore on the basis of the presence/absence of the output voltage of the AC/DC converter 12.

If the output voltage of the AC/DC converter 12 is present, then the electric power buffer 38 stores the electric power originating from that AC/DC converter 12. If, on the other hand, the output voltage of the AC/DC converter 12 is absent, then the electric power buffer 38 supplies the electric power that was previously stored to the switch 24 during the transition, or rather the switching, between the direct current voltage originating from the AC/DC converter 12 and the direct current voltage originating from the rechargeable battery pack 18 and stabilized by the voltage regulator 22.

The AC/DC converter 12 is electrically connected to the switch 24, by way of the first electrical connection line, and is configured to supply electric power, in particular the output voltage in direct current, to the switch 24, in the presence of the input voltage in alternating current 42, originating from the main source of electric power in input to the electric power supply device 10, i.e. from the electricity mains supply.

The switch 24 of the electric power supply device 10 for network devices according to the invention is configured to receive the output voltage in direct current originating from the AC/DC converter 12. The switch 24 is further configured to receive the output voltage in direct current originating from the electric power buffer 38. The switch 24 is further configured to receive the output voltage in direct current originating from the rechargeable battery pack 18 and stabilized by the voltage regulator 22. The switch 24 is electrically connected to the AC/DC converter 12, and vice versa, by way of the first electrical connection line. The switch 24 is electrically connected to the electric power buffer 38, and vice versa, by way of the first electrical connection line. The switch 24 is electrically connected to the voltage regulator 22, and vice versa, by way of the second electrical connection line.

The switch 24 is configured to manage the transition, or rather the switching, between the direct current voltage originating from the AC/DC converter 12, the direct current voltage originating from the electric power buffer 38, and the direct current voltage originating from the rechargeable battery pack 18 and stabilized by the voltage regulator 22. Preferably, the switch 24 is of the electronic type.

In particular, the switch 24 is configured to operate on the basis of the presence/absence of the input voltage in alternating current 42, originating from the main source of electric power in input to the electric power supply device 10, i.e. from the electricity mains supply, and therefore on the basis of the presence/absence of the output voltage of the AC/DC converter 12.

If the output voltage of the AC/DC converter 12 is present, the switch 24 enables the path, i.e. the first electrical connection line, between the AC/DC converter 12 and the output of the electric power supply device 10, supplying the output voltage in direct current 44.

When the output voltage of the AC/DC converter 12 is absent, then the switch 24 enables first the path, i.e. the first electrical connection line, between the electric power buffer 38 and the output of the electric power supply device 10, and then the path, i.e. the second electrical connection line, between the rechargeable battery pack 18, the battery management system 16 (if any), the voltage regulator 22 and the output of the electric power supply device 10, supplying the output voltage in direct current 44.

Advantageously, the switch 24 is further configured to operate without causing interruptions or voltage sags on the output voltage 44 of the electric power supply device 10. In this regard, it should be noted that many residential network devices withstand interruptions to the electric power supply of a maximum duration of a few milliseconds, or variations of the input voltage of up to a few hundred millivolts.

As mentioned, advantageously, the electric power supply device 10 for network devices according to the invention further comprises an EMI filter 26 (Electro-Magnetic Interference).

The EMI filter 26 is a passive filter, preferably a filter of the low-pass type, configured to attenuate the electromagnetic noise components affecting the electric power supply device 10.

EMI filters are present in most electronic devices in order to allow these devices to meet regulations governing electromagnetic compatibility, in particular with regard to electromagnetic waves that are conducted and/or radiated.

The switch 24 is electrically connected to the EMI filter 26, and vice versa. The EMI filter 26 is arranged between the switch 24 and the network device, in particular of the residential type, which is electrically connectable or connected to the electric power supply device 10 according to the invention.

Preferably, the EMI filter 26 is further configured to ensure electromagnetic compatibility with regard to electromagnetic waves conducted and/or radiated by the electric power supply device 10, according to the reference standards, including for example EN 61204-3:2000 (class B), EN 55022:2010+AC:2011 (class B), EN 61000-3-2:2006+AMD/Al/A2:2009, EN 61000-3-3:2008.

According to an embodiment of the electric power supply device 10 according to the invention, the nominal value of the input voltage in alternating current is comprised between 190 V AC and 260 V AC. According to an embodiment of the electric power supply device 10 according to the invention, the value of the output voltage in direct current is 12 V DC ± 5%. According to an embodiment of the electric power supply device 10 according to the invention, the value of the output voltage in direct current, with the rechargeable battery pack 18 in the discharging phase, is 12 V DC ± 5% and, in the phase of switching from the main source of electric power to the rechargeable battery pack 18, is greater than 11.5 V DC.

According to an embodiment of the electric power supply device 10 according to the invention, the value of the nominal input current with the rechargeable battery pack 18 charged is approximately 0.12 A (for an input voltage of 230 V AC). According to an embodiment of the electric power supply device 10 according to the invention, the value of the nominal input current with the rechargeable battery pack 18 charging is approximately 0.62 A (for an input voltage of 230 V AC).

According to an embodiment of the electric power supply device 10 according to the invention, the maximum output current value is approximately 2.8 A. Similarly, According to an embodiment of the electric power supply device 10 according to the invention, the maximum discharging current value is approximately 2.8 A.

According to an embodiment, the electric power supply device 10 according to the invention can operate at an ambient temperature comprised between 0 °C and 40 °C.

According to an embodiment, the electric power supply device 10 according to the invention can have an MTBF (Mean Time Between Failures) of 200,000 hours at an ambient temperature of 40 °C, according to the MIL-HDBK-217F standard.

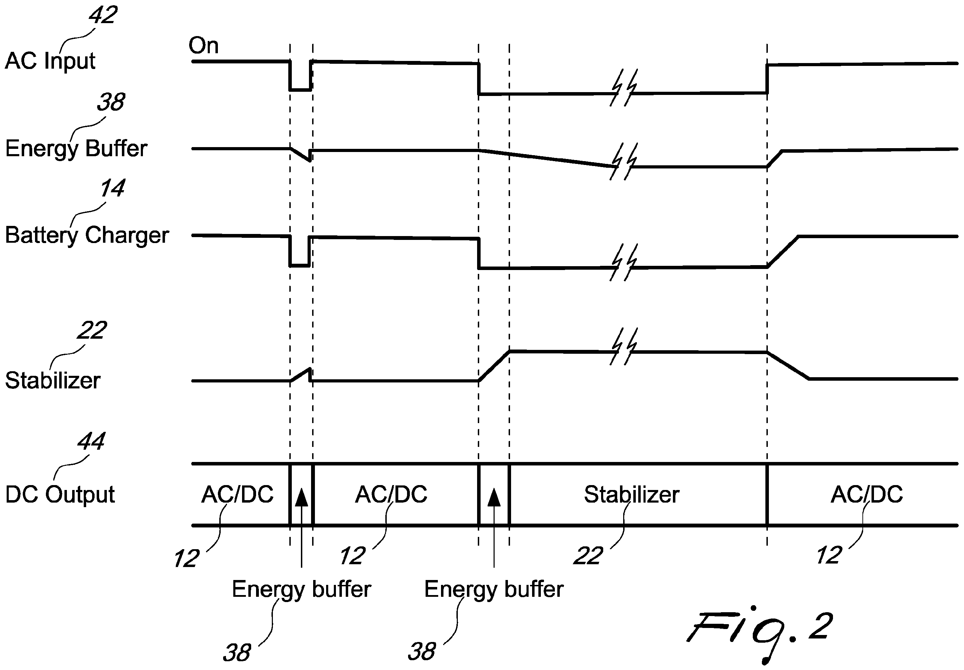

With particular reference to Figure 2, the operation of an embodiment of the electric power supply device 10 for network devices, in particular of the residential type, according to the invention is described below.

Under normal operating conditions of the electricity mains supply, the input voltage in alternating current 42, originating from the main source of electric power in input to the electric power supply device 10, is present in input to the AC/DC converter 12. The AC/DC converter 12 converts this input voltage in alternating current to an output voltage in direct current.

The electric power buffer 38 is charged by storing the electric power originating from the AC/DC converter 12, in particular the output voltage in direct current.

The preliminary input sensor 40 detects the presence of the output voltage in direct current originating from the AC/DC converter 12. The preliminary input sensor 40 activates (or keeps activated) the battery charger 14 and deactivates (or keeps deactivated) the voltage regulator 22, in the presence of the output voltage of the AC/DC converter 12.

Since the AC/DC converter 12 is electrically connected to the switch 24, the output voltage in direct current 44 of the electric power supply device 10 corresponds to the output voltage in direct current of the AC/DC converter 12.

If the electricity mains supply malfunctions, the input voltage in alternating current 42, originating from the main source of electric power in input to the electric power supply device 10, is absent in input to the AC/DC converter 12.

If the electricity mains supply does not work correctly for a brief length of time, i.e. there are brief interruptions or suspensions of the input voltage in alternating current 42, then the switch 24 selects the direct current voltage originating from the electric power buffer 38.

The electric power buffer 38 discharges, in so doing supplying the electric power that was previously stored, in particular the direct current voltage, to the switch 24.

The preliminary input sensor 40 detects the absence of the output voltage in direct current originating from the AC/DC converter 12. The preliminary input sensor 40 deactivates (or keeps deactivated) the battery charger 14 and activates (or keeps activated) the voltage regulator 22, in the absence of the output voltage of the AC/DC converter 12.

Since the electric power buffer 38 is electrically connected to the switch 24, the output voltage in direct current 44 of the electric power supply device 10 corresponds to the output voltage in direct current of the electric power buffer 38. Since in this case the malfunctioning of the electricity mains supply is for a brief length of time, the voltage regulator 22 is transient and does not reach continuous operation.

If the electricity mains supply does not work correctly for a long length of time, i.e. there are lengthy interruptions or suspensions of the input voltage in alternating current 42, then the switch 24 selects first the direct current voltage originating from the electric power buffer 38, and then the direct current voltage originating from the rechargeable battery pack 18 and stabilized by the voltage regulator 22.

The electric power buffer 38 discharges, thus supplying the electric power that was previously stored, in particular the direct current voltage, to the switch 24.

The preliminary input sensor 40 detects the absence of the output voltage in direct current originating from the AC/DC converter 12. The preliminary input sensor 40 deactivates (or keeps deactivated) the battery charger 14 and activates (or keeps activated) the voltage regulator 22, in the absence of the output voltage of the AC/DC converter 12.

Since the electric power buffer 38 and the voltage regulator 22 are electrically connected to the switch 24, the output voltage in direct current 44 of the electric power supply device 10 corresponds to the output voltage in direct current of the electric power buffer 38, for a first (brief) period of time, when the voltage regulator 22 is transient, and then to the output voltage in direct current of the voltage regulator 22, for a second period of time, when that voltage regulator 22 is in continuous operation. In practice, the first time period is equivalent to the transient time of the voltage regulator 22 that is necessary for the latter to reach continuous operation.

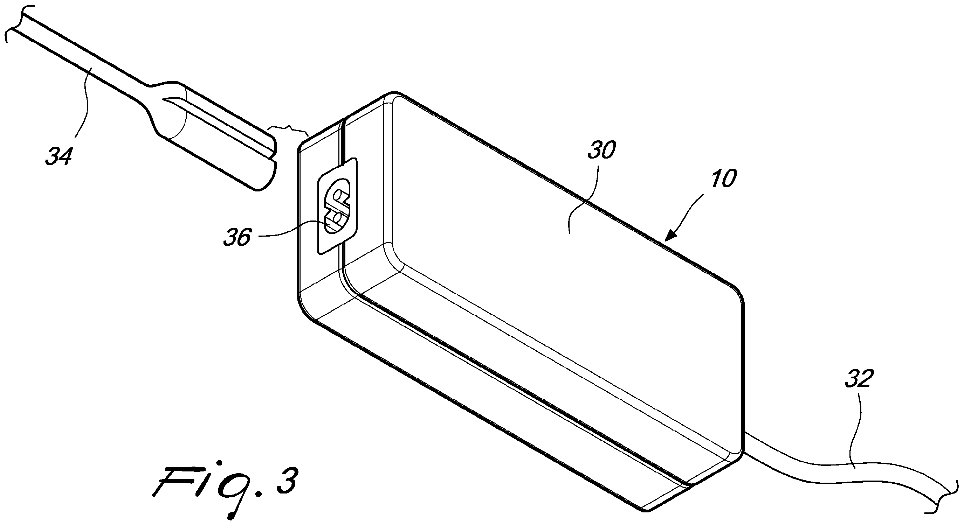

With particular reference to Figure 3, advantageously, the electric power supply device 10 according to the invention further comprises a box-like body 30 adapted to contain at least some, and preferably all, of the elements 12, 14, 16, 18, 20, 22, 24, 26, 38, 40 shown in Figure 1 and described above.

Advantageously, the box-like body 30 of the electric power supply device 10 according to the invention is made of plastic material of the self-extinguishing type, for example class V0 of self- extinguishment.

According to an embodiment, the box-like body 30 of the electric power supply device 10 according to the invention is provided in the following maximum dimensions: 172x67x47 millimeters.

According to an embodiment, the input voltage in alternating current passes through a separate wire 34 connected to a first end of the electric power supply device 10, in particular of the corresponding box-like body 30, while the output voltage in direct current passes through an integrated wire 32 connected to a second end of the electric power supply device 10, in particular of the corresponding box-like body 30.

In a different embodiment, the input voltage in alternating current passes through the integrated wire 34 connected to the second end of the electric power supply device 10, in particular of the corresponding box-like body 30, while the output voltage in direct current passes through the separate wire 32 connected to the first end of the electric power supply device 10, in particular of the corresponding box-like body 30.

According to an embodiment, the electric power supply device 10 for network devices, in particular the corresponding box-like body 30, comprises a seat 36 adapted to accommodate an end of the separate wire 34.

In practice it has been found that the present invention fully achieves the set aim and objects. In particular, it has been seen that the electric power supply device for network devices, in particular of the residential type, thus conceived makes it possible to overcome the qualitative limitations of the known art, in that it makes it possible to obtain better effects than those that can be obtained with conventional solutions and/or similar effects at lower cost and with higher performance levels.

An advantage of the electric power supply device for network devices, in particular of the residential type, according to the present invention consists in that it makes it possible to electrically power such network devices continuously and constantly, i.e. even in the event of an interruption in the main source of electric power, thus ensuring the continuity of the service supplied by means of such network devices.

Another advantage of the electric power supply device for network devices, in particular of the residential type, according to the present invention consists in that it makes it possible to eliminate the negative effects, in particular the brief interruption to the electric power supply, caused by the transition, or rather the switching, from the main source of electric power to the internal batteries, and vice versa, thus avoiding the execution of the initialization procedure at each transition or switching.

Another advantage of the electric power supply device for network devices, in particular of the residential type, according to the present invention consists in that it makes it possible to maximize energy efficiency.

Another advantage of the electric power supply device for network devices, in particular of the residential type, according to the present invention consists in that it does not increase the number of devices present in a residential or business environment.

Although the electric power supply device for network devices according to the invention has been conceived in particular to power network devices of the residential type continuously and constantly and without outages caused by interruptions to the electricity mains supply, it can in any case be used, more generally, to power electric apparatuses continuously and constantly in private or public environments.

The invention, thus conceived, is susceptible of numerous modifications and variations, all of which are within the scope of the appended claims.

Except where indicated otherwise, the various embodiments described above can be combined in order to provide further and/or alternative embodiments. In addition, the present description covers combinations of variations and preferred embodiments that are not explicitly described.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the explanations or by the preferred embodiments illustrated in the description by way of examples, but rather the claims shall comprise all the patentable characteristics of novelty that reside in the present invention, including all the characteristics that would be considered as equivalent by the person skilled in the art.

The disclosures in Italian Patent Application No. 102023000000198 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric power supply device (10) for network devices, in particular of the residential type, which is electrically connectable in input to an electricity mains supply and in output to at least one network device, and which comprises:
- an AC/DC converter (12) configured to convert an alternating current voltage (42) to a direct current voltage;
- a rechargeable battery pack (18) configured to store electric power and provide a direct current voltage;
- a battery charger (14) electrically connected to said AC/DC converter (12) and to said rechargeable battery pack (18), and configured to receive said direct current voltage that arrives from said AC/DC converter (12) and to electrically supply and charge said rechargeable battery pack (18); and
- a voltage regulator (22) electrically connected to said rechargeable battery pack (18) and configured to stabilize said direct current voltage that arrives from said rechargeable battery pack (18);
**characterized in that** it further comprises:
- an electric power buffer (38), electrically connected to said AC/DC converter (12) and configured to receive said direct current voltage that arrives from said AC/DC converter (12), in order to store electric power and to provide a direct current voltage;
- a preliminary input sensor (40), electrically connected to said AC/DC converter (12) and configured to receive and detect said direct current voltage that arrives from said AC/DC converter (12), in order to deactivate said battery charger (14) and activate said voltage regulator (22), in the absence of said direct current voltage arriving from said AC/DC converter (12), and to activate said battery charger (14) and deactivate said voltage regulator (22), in the presence of said direct current voltage that arrives from said AC/DC converter (12); and
a first switch (24), electrically connected to said AC/DC converter (12), to said electric power buffer (38) and to said voltage regulator (22), and configured to manage a switching between said direct current voltage that arrives from said AC/DC converter (12), said direct current voltage that arrives from said electric power buffer (38), and said direct current voltage that arrives from said rechargeable battery pack (18), on the basis of the presence/absence of said alternating current voltage (42) and thus of said direct current voltage that arrives from said AC/DC converter (12).

2. The electric power supply device (10) for network devices according to claim 1, which further comprises a battery management system (16) electrically connected to said rechargeable battery pack (18), and configured to manage and control the operation of said rechargeable battery pack (18), and to ensure that respective maximum and/or minimum threshold values are not exceeded by a plurality of parameters of said rechargeable battery pack (18).

3. The electric power supply device (10) for network devices according to claim 2, which further comprises a second switch arranged between said rechargeable battery pack (18) and said battery management system (16), said second switch being configured to isolate said rechargeable battery pack (18) by interrupting its electrical connection to said battery management system (16).

4. The electric power supply device (10) for network devices according to claim 2 or 3, which further comprises signaling means (20) functionally connected to said battery management system (16), and configured to emit a visual signal indicating a state of operation of said electric power supply device (10).

5. The electric power supply device (10) for network devices according to claim 4, wherein said signaling means (20) comprise one or more LEDs.

6. The electric power supply device (10) for network devices according to any one of the preceding claims, wherein said rechargeable battery pack (18) comprises at least one battery having a protection device of the CID (Current Interrupt Device) type configured to provide ohmic isolation in the event of an increase in internal pressure.

7. The electric power supply device (10) for network devices according to any one of the preceding claims, wherein said rechargeable battery pack (18) comprises at least one battery of the Li-Ion NCM (Nickel-Cobalt-Manganese) type.

8. The electric power supply device (10) for network devices according to any one of the preceding claims, **characterized in that** said battery charger (14) is configured to operate in a sequence of steps comprising:
- the charging of said battery pack (18) occurs at a constant current, the voltage of said battery pack (18) increasing linearly over time until a voltage threshold is reached;
- the charging of said battery pack (18) occurs at a constant voltage, the current of said battery pack (18) progressively decreasing over time until a current threshold is reached; and
- the voltage of said battery pack (18) is kept constant by proceeding with short charges of said battery pack (18) whenever the voltage of said battery pack (18) falls below a voltage threshold.

9. The electric power supply device (10) for network devices according to any one of the preceding claims, which further comprises an EMI filter (26) arranged between said switch (24) and said at least one network device connected to said electric power supply device (10), and configured to attenuate electromagnetic noise components affecting said electric power supply device (10).

10. The electric power supply device (10) for network devices according to any one of the preceding claims, which further comprises a box-like body (30) adapted to contain at least a portion of said elements (12, 14, 16, 18, 20, 22, 24, 26, 38, 40) of said electric power supply device (10).

11. The electric power supply device (10) for network devices according to claim 10, wherein said box-like body (30) is made of plastic material of the self-extinguishing type.
